# EUROPEAN PATENT APPLICATION

(11) **EP 2 293 542 A2**
(43) Date of publication of application: **09.03.2011**
(21) Application number: 10169116.0
(22) Date of filing: 09.07.2010
(51) Int. Cl.: H04N 5/232, G03B 13/36

(54) **Autofocus frame auto-tracking system**

(30) Priority: 22.07.2009 JP 2009171360
(71) Applicant: Fujifilm Corporation, Minato-ku Tokyo (JP)
(72) Inventor: Takano, Yoshijiro, Saitama (JP); Yata, Kunio, Saitama (JP)
(74) Representative: Klunker . Schmitt-Nilson . Hirsch

(57) **Abstract**

Disclosed is an AF frame auto-tracking system that does not require a complicated operation when starting AF frame auto-tracking, is capable of setting the face of a person as a tracking target with a simple operation, and reduces the burden on an operator.

A CPU 30 of an image processing unit 18 determines whether the face of a person is included in an image captured by a camera body 14. If it is determined that the face of the person is included in the captured image, the CPU automatically sets the face of the person included in the captured image as an object, which is a tracking target. When a plurality of faces of persons is included in the captured image, the CPU automatically sets a face with the largest size among the plurality of faces of persons as the object, which is the tracking target.

## Description

### BACKGROUND OF THE INVENTION

### 1. Field of the Invention

The present invention relates to an AF frame auto-tracking system, and more particularly, to an AF frame auto-tracking system having a function that allows an AF frame (AF area) indicating the range of an object brought into focus by auto focus (AF) to automatically track a predetermined object.

### 2. Description of the Related Art

In the auto focus (AF) system for automatically focusing the camera according to the related art, an instruction to designate a focus position needs to be input to the camera. In this case, in a general camera, the focus position is fixed to the center of an imaging range. For example, a person who is disposed at the center of the imaging range is in focus.

However, for example, when the focus position is fixed during the capture of a moving object, it is difficult to obtain a high-quality image. For example, an AF frame auto-tracking system has been proposed which controls the AF area (AF frame) to automatically track an object such that the object is in focus, when a television camera is used to capture a scene in which the object is actively moving in a sportscast (for example, see JP-A-2006-267221 corresponding to US-A-2006/0140612). However, in the specification, similar to the AF area, the AF frame indicating the outline of the range of the AF area is generally used as the term that means the range of an object to be focused.

In addition, a digital camera has been proposed which detects an image indicating the face of a person from the captured image and is automatically focused on the face, which is an object, or automatically changes a zoom ratio such that a region indicating the face in the detected image is enlarged (for example, see JP-A-2004-320286 corresponding to US-A-2004/0207743).

However, when an AF frame auto-tracking process of allowing the AF frame to automatically track a predetermined object starts, the operator needs to designate an object to be focused, that is, an object to be tracked. Therefore, the operator uses an operating device, such as a joystick, to move the position of the AF frame in the imaging range such that the position of the AF frame is aligned with the position of the object that is desired to be tracked. Then, the operator turns on a tracking start switch to set (decide) an object in the range of the current AF frame as the object to be tracked, and performs an operation for starting the AF frame auto-tracking process.

However, it takes time and effort for the operator to set the AF frame to the position of the object to be tracked. In addition, in a shoulder-type television camera (portable camera) for the news, it is difficult to provide an operating device for operating the AF frame at the position where the operator (camera man) can easily operate the operating device.

Since the operator operates the camera constantly through a viewfinder, it is necessary to automatically track the AF frame with an operation that is as simple as possible.

In particular, in a music program or a sportscast in which a person is preferentially captured, when a plurality of faces of persons is included in the captured image, the operator needs to search for and select a face, which is a tracking target, from the plurality of faces of persons. Therefore, a large burden is imposed on the operator.

### SUMMARY OF THE INVENTION

The invention has been made in order to solve the above-mentioned problems, and an object of the invention is to provide an AF frame auto-tracking system that does not require a complicated operation when starting AF frame auto-tracking, is capable of setting the face of a person as a tracking target with a simple operation, and reduces the burden on an operator.

According to a first aspect of the invention, an AF frame auto-tracking system includes: an imaging unit that captures an object image formed by an optical system; an auto focus unit that adjusts the focus of the optical system such that an object in the range of a predetermined AF frame in the image captured by the imaging unit is in focus; an AF frame auto-tracking unit that controls the AF frame to automatically track an object, which is a predetermined tracking target, such that the object, which is the tracking target, is in focus; a determining unit that determines whether the face of a person is included in the image captured by the imaging unit; and a tracking target automatic setting unit that automatically sets the face of the person included in the captured image as the object, which is the tracking target, when the determining unit determines that the face of the person is included in the captured image. When a plurality of faces of persons is included in the captured image, the tracking target automatic setting unit automatically sets a face with the largest size among the plurality of faces of persons as the object, which is the tracking target.

According to a second aspect of the invention, in the AF frame auto-tracking system according to the first aspect, when the plurality of faces of persons included in the captured image has the same size, the tracking target automatic setting unit may automatically set a face that is disposed at the center of the captured image among the plurality of faces of persons as the object, which is the tracking target.

According to a third aspect of the invention, in the AF frame auto-tracking system according to the first or second aspect, when the determining unit determines that the face of the person is not included in the captured image, the tracking target automatic setting unit may automatically set an object in the range of the AF frame as the object, which is the tracking target.

According to a fourth aspect of the invention, in the AF frame auto-tracking system according to any one of the first to third aspects, the AF frame auto-tracking system may be provided in a portable camera.

According to a fifth aspect of the invention, in the AF frame auto-tracking system according to the fourth aspect, an AF frame operating device that changes the position of the AF frame may not be provided.

According to the above-mentioned aspects of the invention, even when a plurality of faces of persons is included in the captured image, a face with the largest size among the plurality of faces of persons is automatically set as an object, which is a tracking target, and an AF frame is automatically tracked. Therefore, the operator does not need to perform a complicated operation when starting AF frame auto-tracking, and it is possible to significantly reduce the burden on the operator.

### BRIEF DESCRIPTION OF THE DRAWINGS

Fig. 1 is a block diagram illustrating the overall structure of an AF frame auto-tracking system according to an embodiment of the invention;
Fig. 2 is a diagram illustrating an AF frame (AF area);
Fig. 3 is a diagram illustrating an example of a screen displayed on a liquid crystal display with a touch panel; and
Figs. 4A and 4B are a flowchart illustrating the procedure of an AF frame auto-tracking process of a CPU of an image processing unit when a full auto-tracking mode is selected.

### DESCRIPTION OF THE PREFERRED EMBODIMENTS

Hereinafter, an AF frame auto-tracking system according to an embodiment of the invention will be described in detail with reference to the accompanying drawings.

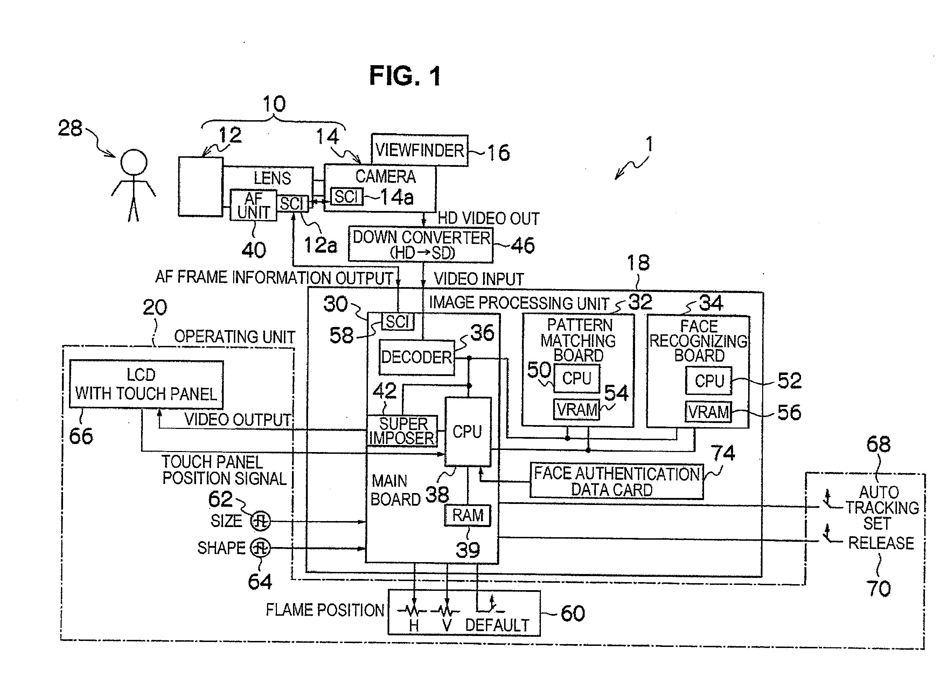

Fig. 1 is a block diagram illustrating the overall structure of the AF frame auto-tracking system according to the embodiment of the invention. An AF frame auto-tracking system 1 shown in Fig. 1 includes a television camera 10 for broadcasting or business and an AF frame auto-tracking apparatus using an image processing unit 18 and an AF frame operating unit 20.

The television camera 10 includes a camera body 14, which is an HD camera corresponding to a high-definition television [HD TV] system, and a lens device 12 including an imaging lens (optical system) mounted to a lens mount of the camera body 14.

For example, the camera body 14 is provided with an imaging device (for example, a CCD) and a predetermined signal processing circuit. The image formed by the imaging lens of the lens device 12 is converted into electric signals by the imaging device, and the signal processing circuit performs predetermined signal processing on the electric signals to generate HDTV video signals (HDTV signals). The generated HDTV video signals are output from a video signal output terminal of the camera body 14 to the outside.

The camera body 14 also includes a viewfinder 16, and an image captured by the television camera 10 is displayed on the viewfinder 16. In addition, various information items other than the captured image are displayed on the viewfinder 16. For example, an image (frame image) indicating the range (a position, a size, and a shape) of an AF frame that is currently set is displayed so as to overlap the captured image. The AF frame indicates the range (outline) of an object focused by auto focus (AF).

The lens device 12 includes an imaging lens (zoom lens) that is mounted to the lens mount of the camera body 14. The imaging lens focuses an object 28 on an imaging surface of the imaging device of the camera body 14. Although not shown in the drawings, the imaging lens includes, as components, movable portions for adjusting imaging conditions, such as a focus lens group, a zoom lens group, and an aperture diaphragm. These movable portions are electrically driven by a motor (servo mechanism). For example, the focus lens group or the zoom lens group is moved in the optical axis direction. The focus lens group is moved to adjust the focus (object distance), and the zoom lens group is moved to adjust the focal length (zoom ratio).

In the AF system, at least the focus lens group may be electrically driven, and the other movable portions may be manually driven.

The lens device 12 further includes an AF unit 40 and a lens CPU (not shown). The lens CPU controls the overall operation of the lens device 12. The AF unit 40 is a processing unit that acquires information required to perform AF control (auto focus), and includes an AF processing unit (not shown) and an imaging circuit for AF (not shown).

The imaging circuit for AF is provided in the lens device 12 in order to acquire video signals for AF, and includes, for example, an imaging device (which is referred to as an imaging device for AF), such as a CCD, and a processing circuit that outputs a signal output from the imaging device for AF as a video signal of a predetermined format. The video signal output from the imaging circuit for AF is a brightness signal.

Object light branched from the object light incident on the imaging device of the camera body 14 by, for example, a half mirror which is provided on the optical path of the imaging lens is focused on the imaging surface of the imaging device for AF. The imaging range and the object distance (the distance to an object in focus) in the imaging area of the imaging device for AF are equal to the imaging range and the object distance in the imaging area of the imaging device of the camera body 14. The object image captured by the imaging device for AF is identical to that captured by the imaging device of the camera body 14. The two imaging ranges do not need to be completely equal to each other. For example, the imaging range of the imaging device for AF may include the imaging range of the imaging device of the camera body 14.

The AF processing unit acquires a video signal from the imaging circuit for AF, and calculates a focus evaluation value indicating the level of the contrast of the image of the object in the range of the AF area (AF frame) to be subjected to AF processing, on the basis of the video signal. For example, high-frequency component signals are extracted from the video signals obtained by the imaging device for AF by a high pass filter, and among the high-frequency component signals, signals that correspond to one screen (one frame) and are in a range corresponding to the AF area which is set by the following process are integrated. The integrated value corresponding to each screen indicates the level of the contrast of the image of the object in the AF area and is given as a focus evaluation value to the lens CPU.

The lens CPU acquires the information of the AF frame (AF frame information) indicating the range (outline) of the AF area from the image processing unit 18, which will be described below, and designates, as the AF area, the range of the AF frame designated by the AF frame information to the AF processing unit. Then, the lens CPU acquires the focus evaluation value calculated by the image (video signal) in the AF area from the AF processing unit.

In this way, whenever video signals corresponding to one screen are acquired from the imaging circuit for AF (whenever the AF processing unit calculates the focus evaluation value), the lens CPU acquires the focus evaluation value from the AF processing unit, and controls the focus lens group such that the acquired focus evaluation value is the maximum (the largest), that is, the contrast of the image of the object in the AF frame is the maximum. For example, generally, a hill-climbing method has been known as the method of controlling the focus lens group on the basis of the focus evaluation value. In the hill-climbing method, the focus lens group is moved in a direction in which the focus evaluation value increases, and when a point where the focus evaluation value starts to decrease is detected, the focus lens group is set at that point. In this way, the imaging device is automatically focused on the object in the AF frame.

The AF processing unit acquires the video signal from the imaging device for AF mounted to the lens device 12 in order to calculate the focus evaluation value.
However, the AF processing unit may acquire the video signal of the image captured by the imaging device of the camera body 14 from the camera body 14. In addition, any AF unit may be used for auto focusing on the object in the AF frame.

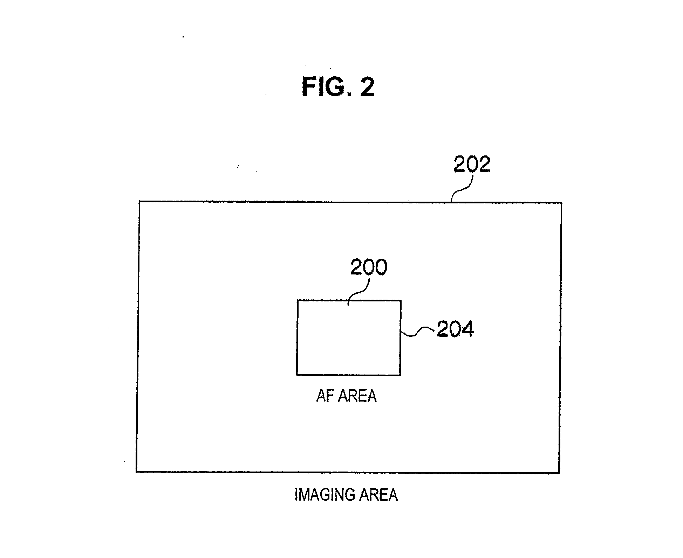

As shown in Fig. 2, an AF area 200 is set as a rectangular area in an imaging area 202 (or an imaging range) of the imaging device of the camera body 14, and a frame 204 indicating the outline of the AF area 200 is the AF frame. An object captured in the range of the AF area 200 (in the AF frame 204) of the imaging device is an AF target.

In the specification, the range of the AF frame 204 (AF area 200) in the imaging area 202 is determined by three factors, these being the position, size, and shape (aspect ratio) of the AF frame 204. When at least one of the three factors of position, size, and shape of the AF frame, is changed, the range of the AF frame is changed.

The lens device 12 is connected to the camera body 14 directly or through a cable. The lens device 12 and the camera body 14 exchange various kinds of information using serial communication interfaces (SCI) 12a and 14a. In this way, the information of the AF frame that is currently set by the AF unit 40 is also transmitted to the camera body 14, and the image of the AF frame corresponding to the position, size, and shape of the AF frame that is currently set is displayed so as to overlap the captured image that is displayed on the viewfinder 16 by the process of the camera body 14.

The image processing unit 18 is a component of the AF frame auto-tracking apparatus and designates the range (the position, size, and shape (aspect ratio)) of the AF frame that is set by the AF unit 40 of the lens device 12 by a manual operation or an AF frame auto-tracking process, which will be described below. For example, the image processing unit 18 is accommodated in a housing and is provided on the side of a barrel of the imaging lens of the lens device 12 or the outer wall of the housing of the camera body 14. However, the position of the image processing unit 18 in the lens device 12 or the camera body 14 is not limited thereto, but the image processing unit 18 may be provided at any position. In addition, the image processing unit 18 may be provided outside the lens device 12 or the camera body 14.

The image processing unit 18 includes an SCI 58, and the SCI 58 is connected to the lens device 12. Therefore, the image processing unit 18 transmits or receives various signals to or from the lens CPU through the SCI 12a. In this way, AF frame information designating the range of the AF frame is transmitted from the image processing unit 18 to the lens CPU of the lens device 12, and the AF unit 40 sets the range of the AF frame on the basis of the AF frame information.

The image processing unit 18 includes a video input connector for receiving video signals, and a video output connector of the camera body 14 is connected to the video input connector by a cable through a down converter 46. In this way, the HDTV signal output from the video output connector of the camera body 14 is converted (downconverted) into a video signal (SDTV signal) of a standard television [NTSC (National Television System Committee)] format by the down converter 46, and the converted video signal is input to the image processing unit 18.

When performing the AF frame auto-tracking process, the image processing unit 18 sequentially acquires one frame of captured images from the video signals input from the camera body 14 and detects a predetermined object, which is a tracking target, from the captured image, which will be described in detail below. Then, the range of the AF frame is determined such that the object is brought into focus by AF, and the determined range of the AF frame is transmitted to the lens CPU of the lens device 12. The structure and process of the image processing unit 18 will be described below.

The AF frame operating unit 20 is a component of the AF frame auto-tracking apparatus and is provided integrally with the image processing unit 18. However, a portion of or the entire AF frame operating unit 20 may be provided separately from the image processing unit 18 and connected to the image processing unit 18 by, for example, a cable. In this embodiment, a liquid crystal display (LCD) 66 with a touch panel, which will be described below, is configured such that it can be removed from the image processing unit 18.

The AF frame operating unit 20 is mainly for performing an operation related to the control of the AF frame and includes an operating member that is manually operated by the user to input the range of the AF frame or an operating member for performing an operation related to the AF frame auto-tracking process that controls the AF frame to automatically track a desired object.

The AF frame operating unit 20 includes a position operating member 60 (for example, a joystick or a trackball) that is manually operated by the user to move the position of the AF frame in the horizontal and vertical directions, a size operating member 62 (for example, a knob) that is manually operated by the user to change the size of the AF frame, a shape operating member 64 (for example, a knob) that is manually operated by the user to change the shape of the AF frame, a tracking start switch 68 that instructs the start of AF frame auto-tracking, and a tracking stop switch 70 that instructs the stopping of the AF frame auto-tracking. A detailed description of the operating members will be omitted. The CPU 38 of the main board 30 of the image processing unit 18 reads the set states of the operating members 60, 62, 64, 68, and 70.

The AF frame operating unit 20 includes the liquid crystal display (hereinafter, referred to as an LCD) 66 with a touch panel. The user touches (taps) the LCD 66 to set the mode related to AF frame auto-tracking. The image displayed on the LCD 66 is appropriately changed by the CPU 38 of the image processing unit 18 according to the set conditions.

In this embodiment, when the AF frame auto-tracking is performed only in the full auto-tracking mode, which will be described below, some or all of the operating members 60, 62, 64, 68, and 70 of the AF frame operating unit 20 may not be provided. The LCD 66 may not be necessarily provided. In the full auto-tracking mode, which will be described below, it is possible to automatically track the AF frame without operating these operating members 60, 62, 64, 68, and 70 or the LCD 66, and thus it is possible to appropriately apply this embodiment to a small camera, such as a portable camera having space restrictions in the arrangement of the AF frame operating devices. In addition, some or all of the operating members 60, 62, 64, 68, and 70 or the LCD 66 may be appropriately set and the position of the AF frame may be manually changed as long as there are no spatial problems and no effect on operability.

Next, the structure and process of the image processing unit 18 will be described.

The image processing unit 18 mainly includes a main board 30, a pattern matching board 32, and a face recognizing board 34. The main board 30, the pattern matching board 32, and the face recognizing board 34 respectively include CPUs 38, 50, and 52 such that the boards individually perform operating processes. In addition, the CPUs 38, 50, and 52 are connected to each other by a bus or a control line such that they perform data communication therebetween or the operating processes are synchronized with each other.

The main board 30 controls the overall operation of the image processing unit 18. The main board 30 includes, for example, an SCI 58, a decoder (A/D converter) 36, a superimposer 42, and a RAM 39 in addition to the CPU 38 that performs an operating process.

As described above, the SCI 58 is an interface circuit for serial communication with the SCI 12a of the lens device 12, and transmits, for example, the AF frame information to the lens device 12.

The decoder 36 is a circuit for converting the video signal (SDTV signal) of the image captured by the television camera 10, which is input from the down converter 46 to the image processing unit 18, into digital data that can be processed by the image processing unit 18, and performs an A/D converting process of converting an analog SDTV signal into a digital video signal. The video signal of the captured image output from the decoder 36 is also transmitted to the pattern matching board 32 or the face recognizing board 34 such that the pattern matching board 32 or the face recognizing board 34 can acquire each frame of images captured by the television camera 10.

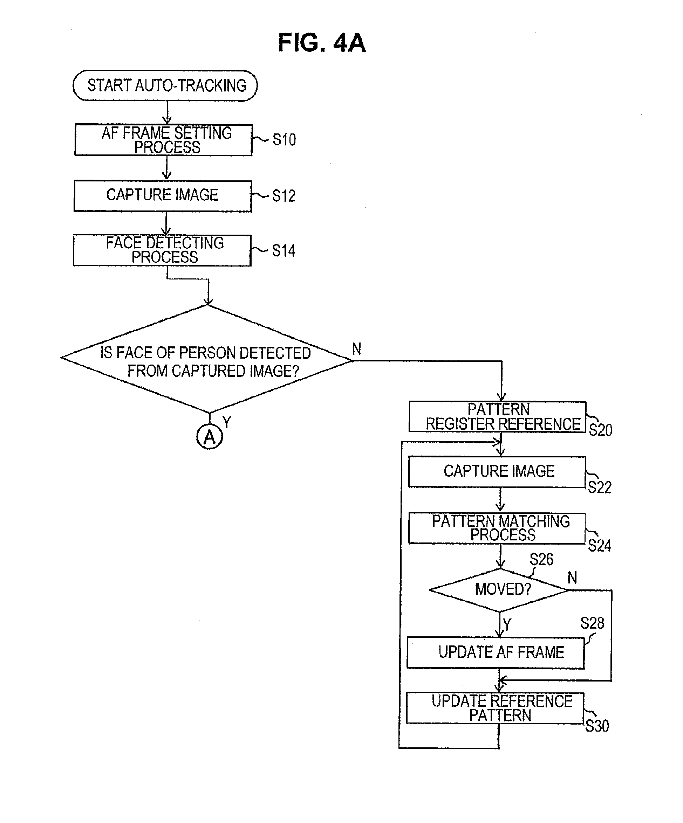

The image processing unit 18 also includes, for example, a memory to which data can be written by the CPU 38 or from which data can be read by the CPU 38 and is appropriately used to store processed data. The memory stores information related to the position, size, and shape of the AF frame that is set in an AF frame setting process (Step S10 in Fig. 4A) in the full auto-tracking mode, which will be described below. The operator (camera man) may operate the AF frame operating unit 20 to change the set information related to the position, size, and shape of the AF frame according to the operator's preference.

The superimposer 42 is a circuit that composes the video signal of the captured image obtained by the decoder 36 and the image signal generated by the CPU 38 and outputs and displays the composed video signal to the LCD 66. In this way, the image captured by the television camera 10 is displayed on both the viewfinder 16 provided in the camera body 14 and the LCD 66, and a superimposed image of the image captured by the television camera 10 and the image of the AF frame indicating the range of the AF frame that is currently set or a menu screen (menu image) input through the touch panel is displayed on the LCD 66. However, only the image generated by the CPU 38 may be displayed without being superimposed on the captured image.

The RAM 39 is a memory that temporarily stores data used in the operating process of the CPU 38.

The pattern matching board 32 and the face recognizing board 34 are arithmetic boards that individually perform a pattern matching process and a face detecting/recognizing process, and include, for example, VRAMs 54 and 56 that temporarily store image data, in addition to the CPUs 50 and 52 that perform the operating processes.

The image processing unit 18 is provided with a slot (not shown) into which a face authentication data card 74, which is an external memory, such as an SD (Secure Digital) card or a USB memory, is inserted. When the face of a specific person is detected by face recognition, authentication data indicating the face of the specific person is stored in the face authentication data card 74 in advance, and the face authentication data card 74 is inserted into the slot. Then, the CPU 38 reads the authentication data required for face recognition from the face authentication data card 74.

Next, the control of the AF frame by the image processing unit 18 having the above-mentioned structure will be described together with a process related to the display and operation of the LCD 66.

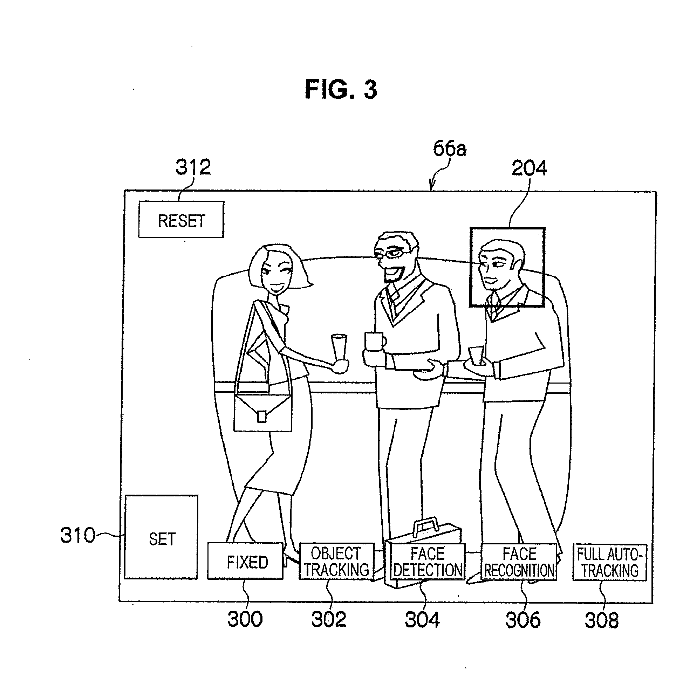

As shown in Fig. 3, a menu screen (menu image) including various buttons 300 to 312 and an image 204 (simply referred to as an AF frame 204) of the AF frame indicating the range of the AF frame that is currently set are displayed on a screen 66a of the LCD 66 so as to be superimposed on the image captured by the television camera 10. The images of various buttons 300 to 312 on the menu screen or the image of the AF frame 204 superimposed on the captured image are generated by the CPU 38 of the main board 30 in the image processing unit 18 shown in Fig. 1, and the images are displayed on the LCD 66 by the superimposer 42 so as to be superimposed on the image captured by the television camera 10 which is output from the decoder 36. However, the CPU 38 controls the display (display content) of the LCD 66.

The LCD 66 includes a touch panel. For example, when a fingertip touches the screen 66a of the LCD 66, position information indicating the touch position (coordinates) is given to the CPU 38. Then, the CPU 38 detects the touch position on the screen 66a of the LCD 66 or the kind of operation (for example, a tap operation and a double tap operation). Then, the CPU 38 performs a process corresponding to the operation.

The basic operations on the screen 66a of the LCD 66 include an operation of allocating instructions to the buttons 300 to 312 in advance and an operation of designating the range of the AF frame 204. The former operation is to tap the position of each of the buttons 300 to 312 with a fingertip. In the latter operation of designating the range of the AF frame 204, for example, when the user taps a position to which the user wants to move the AF frame 204 on the screen 66a of the LCD 66 on which the captured image is displayed, it is possible to move the AF frame 204 such that the position is disposed at the center of the screen. In addition, a drag operation of touching the top or side of the AF frame 204 with the fingertip and sliding it may be performed to move the position of the touched top or side to the dragged position, thereby changing the size or shape of the AF frame 204.

The user can operate the position operating member 60, the size operating member 62, and the shape operating member 64 of the AF frame operating unit 20 to change the position, size, and shape of the AF frame 204.

Next, the menu screen (menu image) displayed on the screen 66a of the LCD 66 will be described. In Fig. 3, the fixed mode selecting button 300 which is represented as "fixed", the object tracking mode selecting button 302 which is represented as "object tracking", the face detection tracking mode selecting button 304 which is represented as "face detection", the face recognition tracking mode selecting button 306 which is represented as "face recognition", and the full auto-tracking mode selecting button 308 which is represented as "full auto-tracking" are for selecting the AF frame control mode.
The user can tap any one of the buttons 300 to 308 to select a desired mode from the fixed mode, the object tracking mode, the face detection tracking mode, the face recognition tracking mode, and the full auto-tracking mode.

In the fixed mode, the operator manually designates the range (the position, size, and shape) of the AF frame, and the AF frame is fixed at the designated position (manual mode). The fixed mode is useful for image capture in the news program in which the camera is hardly moved.

When the user taps the fixed mode selecting button 300 on the screen 66a of the LCD 66 shown in Fig. 3 to select the fixed mode, the CPU 38 mounted on the main board 30 of the image processing unit 18 executes the process of the fixed mode.

That is, as described above, the CPU 38 determines the range of the AF frame on the basis of an operation of changing the range of the AF frame on the screen 66a of the LCD 66 or the manual operations of the operating members (the position operating member 60, the size operating member 62, and the shape operating member 64) for changing the AF frame 204 provided in the AF frame operating unit 20. After determining the range of the AF frame, the CPU 38 transmits the AF frame information indicating the range of the AF frame to the lens CPU of the lens device 12 through the SCI 58.

The object tracking mode is one of the AF frame auto-tracking modes. In the object tracking mode, the AF frame tracks any kind of object. The object tracking mode is useful for image capture in, for example, horse race broadcasting or car race broadcasting where objects are tracked other than the face of a person. In this mode, when the operator designates the range of the AF frame such that the image of any object that is desired to be tracked is included in the AF frame in the captured image, the object in the range is set as a tracking target. The image of the tracking target is registered as a reference pattern, and the CPU 50 of the pattern matching board 32 performs a pattern matching process for detecting an image range corresponding to the reference pattern from the images that are sequentially captured. The CPU 38 of the main board 30 determines the range in which the reference pattern is detected as the range of the AF frame and transmits it to the lens CPU of the lens device 12. When the lens device 12. does not perform AF control during the start of AF frame auto-tracking (when the operation mode is not the AF mode), the start of AF is instructed in operational association with the start of the AF frame auto-tracking.

The face detection tracking mode is one of the AF frame auto-tracking modes. In the face detection tracking mode, the AF frame tracks the face of a given person. The face detection tracking mode is useful for image capture in a music program in which the face of a person is detected and tracked. In this mode, first, the CPU 52 of the face recognizing board 34 performs a known face detecting process for detecting the face image of a given person from the captured image. When the operator designates a face image, which is a tracking target, from the detected face image, the face image is set as the tracking target. Then, the CPU 52 of the face recognizing board 34 performs the face detecting process on the images that are sequentially captured, and the CPU 38 of the main board 30 performs a process of specifying a face image, which is a tracking target, from the detected face image. The CPU 38 of the main board 30 determines the range of the detected face image, which is a tracking target, as the range of the AF frame, and transmits it to the lens CPU of the lens device 12.

The face recognition tracking mode is one of the AF frame auto-tracking modes. In the face recognition tracking mode, the AF frame tracks the face of the person that has been previously registered as authentication data. The face recognition tracking mode is useful for image capture in a music program, in which the person to be captured is determined in advance, or a sportscast. In this mode, the authentication data of the face of the person, which is a tracking target, is acquired from the face authentication data card 74 shown in Fig. 1 that is inserted into the slot (not shown). Similar to the face detection tracking mode, the CPU 52 of the face recognizing board 34 performs the face detecting process, and a face image, which is a tracking target, is detected from the detected face image by a known face authenticating process using authentication data. The CPU 38 of the main board 30 determines the range of the detected face image, which is a tracking target, as the range of the AF frame, and transmits it to the lens CPU of the lens device 12.

The full auto-tracking mode is one of the AF frame auto-tracking modes. In the full auto-tracking mode, similar to the face detection tracking mode, the CPU 52 of the face recognizing board 34 performs a known face detecting process for detecting the face image of a given person from the captured image. When the face image of the person is included in the detected face image, the face image is automatically set as a tracking target without instructions from the operator. In this case, when a plurality of face images is included in the captured image, a face image to be tracked is determined on the basis of the size or position of the face. When the face image of the person is not included in the captured image, AF frame auto-tracking is performed in the object tracking mode. The full auto-tracking mode will be described in detail below.

In Fig. 3, the set button 310 which is represented as "set" and the reset button 312 which is represented as "reset" are for instructing the start and stop of the AF frame auto-tracking, respectively. The buttons 310 and 312 are displayed only when the control mode (the object tracking mode and the face detecting mode) in which the operator instructs the start or stop of the AF frame auto-tracking is selected. The set button 310 and the reset button 312 have the same functions as the tracking start switch 68 and the tracking stop switch 70 (see Fig. 1) of the AF frame operating unit 20.

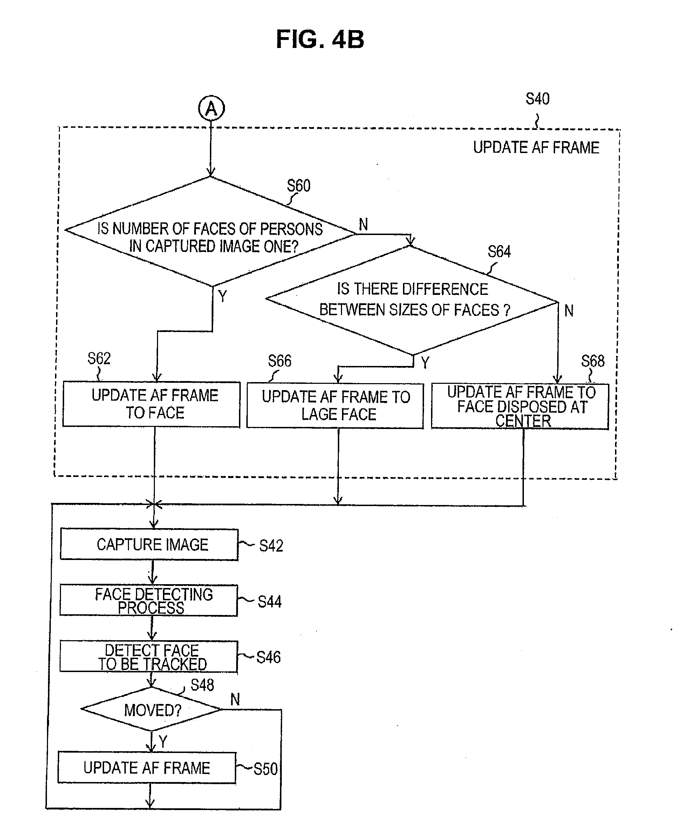

Next, the AF frame auto-tracking process of the image processing unit 18 having the above-mentioned structure when the full auto-tracking mode is selected will be described. Fig. 4A and 4B are a flowchart illustrating the procedure of the AF frame auto-tracking process when the CPU of the image processing unit selects the full auto-tracking mode.

When a predetermined operation is performed to select the full auto-tracking mode, first, the CPU 38 of the main board 30 performs an AF frame setting process for setting the range of the AF frame (Step S10). In the AF frame setting process, the AF frame is set at a predetermined position (for example, a central position) in the imaging range (imaging area) on the basis of information related to the position, size, and shape of the AF frame stored in the memory (not shown) of the main board 30. Then, the AF frame information indicating the range (the position, size, and shape) of the set AF frame is transmitted to the lens CPU of the lens device 12 through the SCI 58. In this way, the range of the AF frame set by the AF unit 40 of the lens device 12 is designated by the AF frame information.

The CPU 38 of the main board 30 determines whether the LCD 66 is connected. If it is determined that the LCD 66 is connected, it is determined that the full auto-tracking mode is selected and each process is performed according to the flowchart shown in Figs. 4A and 4B.

The CPU 52 of the face recognizing board 34 acquires one frame of image data of the captured image from the decoder 36 in response to instructions from the CPU 38 (Step S12). Then, a known face detecting process of detecting the face (face image) of a given person from the captured image is performed (Step S14). Then, the range of the detected face image is transmitted to the CPU 38 of the main board 30.

Then, the CPU 38 determines whether the face image is detected from the captured image by the face detecting process in Step S14 (Step S16).

If the determination result of Step S16 is 'NO', the AF frame auto-tracking process using the pattern matching process in Steps S20 to S30 is performed. If the determination result of Step S16 is 'YES', the AF frame auto-tracking process using the face detecting process in Steps S40 to S50 is performed.

If the determination result of Step S16 is 'NO', that is, if it is determined that no face image is included in the captured image, the CPU 38 (and the CPU 50 of the pattern matching board 32) starts the AF frame auto-tracking process using the pattern matching process in Steps S20 to S30. In this case, first, the CPU 38 registers (stores) an image in the range of the AF frame in the captured image acquired in Step S12 as a reference pattern image (Step S20). Then, the CPU 38 repeatedly performs the following Steps S22 to S30.

When the reference pattern image is registered, the CPU 50 of the pattern matching board 32 acquires one frame of image data of the captured image from the decoder 36 in response to instructions from the CPU 38 (Step S22). Then, the CPU 50 performs the pattern matching process to detect the range of the image matched with the reference pattern image from the captured image (Step S24). Then, the detected range of the image is transmitted to the CPU 38 of the main board 30.

Then, the CPU 38 determines whether the reference pattern image has moved, that is, whether the range of the image in which the reference pattern is detected is different from the range of the AF frame that is currently set (Step S26). However, when the size of the reference pattern image is changed in the captured image, the determination result is 'YES'.

If the determination result of Step S26 is 'YES', the range of the image detected in Step S24 is set (updated) as a new range of the AF frame, and AF frame information indicating the range of the AF frame is transmitted to the lens CPU of the lens device 12 (Step S28).

An image in the image range detected in Step S24 is updated as a new reference pattern image (Step S30).

If the determination result of Step S26 is 'NO', the update of the AF frame in Step S28 is not performed and only the update of the reference pattern in Step S30 is performed.

When Step S30 ends, the process returns to Step S22.

When the operator stops the AF frame auto-tracking, that is, when the tracking stop switch is turned on, the AF frame auto-tracking process stops and the process returns to Step S10. That is, the AF frame returns to a predetermined position (for example, a central position) on the captured image and is fixed at the position, and the AF frame auto-tracking is not performed.

When the operator performs a camera operation to intentionally exclude an object to be tracked from the captured image, the AF frame auto-tracking process may stop similarly to when the tracking stop switch is turned on. It is possible to stop the AF frame auto-tracking with a simple operation.

On the other hand, if the determination result of Step S16 is 'YES', that is, if it is determined that the face image is included in the captured image, the CPU 38 (and the CPU 52 of the face recognizing board 34) starts the AF frame auto-tracking process using the face detecting process in Steps S40 to S50. In this case, first, the CPU 38 changes (updates) the range of the AF frame such that the position, size, and shape of the AF frame are suitable for the face detected from the captured image (Step S40). For example, the range recognized as the face by the face detecting process in Step S14 is changed to the range of the AF frame. Then, Steps S42 to S50 are repeatedly performed.

Next, the AF frame update process in Step S40 will be described in detail. First, the CPU 38 of the main board 30 determines whether the number of face images of the persons detected from the captured image by the face detecting process in Step S14 is one (Step S60).

If the determination result of Step S60 is 'YES', that is, if it is determined that one face image is detected from the captured image, the CPU 38 sets the face image detected by the face detecting process as a tracking target (AF target) and changes (updates) the range (face frame) of the face image to the range of the AF frame (Step S62).

On the other hand, if the determination result of Step S60 is 'NO', that is, if it is determined that a plurality of face images is detected from the captured image by the face detecting process in Step S16, the CPU 38 determines whether there is a difference between the sizes of the plurality of face images in the captured image (Step S64).

If the determination result of Step S64 is 'YES', that is, if it is determined that there is a difference between the sizes of the plurality of face images detected by the face detecting process, the CPU 38 sets a face image with the largest size among the plurality of face images as a tracking target and changes (updates) the range of the face image to the range of the AF frame (Step S66).

On the other hand, if the determination result of Step S64 is 'NO', that is, if it is determined that there is no difference between the sizes of the plurality of face images detected by the face detecting process, the CPU 38 sets a face image that is disposed at the center of the captured image among the plurality of face images as a tracking target and changes (updates) the range of the face image to the range of the AF frame (Step S68).

As such, in the AF frame update process in Step S40, when a plurality of face images is detected from the captured image and there is a difference between the sizes of the plurality of face images, the face image with the largest size is set as a tracking target (AF target) and the AF frame is set to the range of the face image. When there is no difference between the sizes of the plurality of face images (the face images have the same size), the face image disposed at the center of the captured image is set as a tracking target (AF target) and the AF frame is set to the range (face frame) of the face image.

Then, the CPU 52 of the face recognizing board 34 acquires one frame of image data of the captured image from the decoder 36 in response to instructions from the CPU 38 (Step S42). Then, similar to Step S14, the CPU 52 performs the face detecting process of detecting the face image of a given person from the captured image (Step S44). Then, the CPU 52 transmits the range of the detected face image to the CPU 38 of the main board 30.

Then, the CPU 38 detects a portion of the range of the detected face image closest to the range of the AF frame that is currently set as the range of a face image to be tracked (Step S46). However, in Step S46, the detection range of the face image is not the entire range of the captured image, but it may be limited to a peripheral portion of the AF frame that is currently set.

Then, the CPU 38 determines whether a face (face image) to be tracked has moved, that is, whether the range of the detected face image is different from the range of the AF frame that is currently set (Step S48). However, when the size of the face image is changed, the determination result is also 'YES'.

If it is determined that the determination result of Step S48 is 'YES', the range of the face image detected in Step S46 is set (updated) as a new range of the AF frame, and AF frame information indicating the range of the AF frame is transmitted to the lens CPU of the lens device 12 (Step S50). Then, the process returns to Step S42. If the determination result of Step S48 is 'NO', the AF frame is not updated in Step S50, and the process returns to Step S42.

When the operator stops the AF frame auto-tracking, that is, when the tracking stop switch is turned on, the AF frame auto-tracking stops, and the process returns to Step S10. That is, the AF frame returns to a predetermined position (for example, a central position) on the captured image and is then fixed at the position, and the AF frame auto-tracking is not performed.

When the operator performs a camera operation to intentionally exclude an object to be tracked from the captured image, the AF frame auto-tracking process may stop similar to when the tracking stop switch is turned on. It is possible to stop the AF frame auto-tracking with a simple operation.

According to the AF frame auto-tracking system of this embodiment, in the AF frame auto-tracking process in the full auto-tracking mode, it is determined whether the face image of a person is included in the captured image. If it is determined that the face image of the person is included in the captured image, the face image of the person is set as a tracking target (AF target), and the AF frame auto-tracking process using the face detecting process is automatically selected. In this case, when a plurality of face images of persons is included in the captured image, a face image with the largest size among the plurality of face images of persons is set as a tracking target. When the face images have the same size, a face image disposed at the center of the captured image is set as a tracking target.

On the other hand, if it is determined that the face image of person is not included in the captured image, an object (other than the face of person) in the range of the AF frame is set as a tracking target, and the AF frame auto-tracking process using the pattern matching process is automatically selected and performed.

As such, in this embodiment, when the face image of a person is included in the captured image (including the range of the AF frame), the AF frame auto-tracking process (face detection tracking mode) using the face detecting process has priority over the AF frame auto-tracking process (object tracking mode) using the pattern matching process, regardless of the object (other than the face of the person) in the range of the AF frame.

Therefore, when an object that is desired to be tracked is the face of a person, the operator performs only an operation of adjusting the angle of view such that the face of the person that is desired to be tracked is included in the captured image. In this way, it is possible to perform AF frame auto-tracking without starting an AF frame auto-tracking operation.

In particular, even when a plurality of faces (face images) of persons is included in the captured image, a face, which is a tracking target, is automatically set according to the sizes or positions of the face images and AF frame auto-tracking is performed. Therefore, the operator does not need to perform a complicated operation when starting the AF frame auto-tracking. As a result, it is possible to significantly reduce the burden on the operator.

As described above, the AF frame auto-tracking system according to this embodiment has the full auto-tracking mode. Therefore, even when a portion of or the entire AF frame operating unit 20 (for example, the operating members 60, 62, 64, 68, and 70 or the LCD 66) is not provided, it is possible to perform AF frame auto-tracking in the full auto-tracking mode. In addition, it is possible to appropriately apply the AF frame auto-tracking system to a small camera, such as a portable camera having space restrictions in the arrangement of an AF frame operating device.

The AF frame auto-tracking system according to the embodiment of the invention has been described above, but the invention is not limited thereto. Various modifications and changes of the invention can be made without departing from the scope and spirit of the invention.

## Claims

1. An AF frame auto-tracking system comprising:
an imaging unit that captures an object image formed by an optical system;
an auto focus unit that adjusts the focus of the optical system such that an object in the range of a predetermined AF frame in the image captured by the imaging unit is in focus;
an AF frame auto-tracking unit that controls the AF frame to automatically track an object, which is a predetermined tracking target, such that the object, which is the tracking target, is in focus;
a determining unit that determines whether the face of a person is included in the image captured by the imaging unit; and
a tracking target automatic setting unit that automatically sets the face of the person included in the captured image as the object, which is the tracking target, when the determining unit determines that the face of the person is included in the captured image,
wherein, when a plurality of faces of persons is included in the captured image, the tracking target automatic setting unit automatically sets a face with the largest size among the plurality of faces of persons as
the object, which is the tracking target.

2. The AF frame auto-tracking system according to claim 1,
wherein, when the plurality of faces of persons included in the captured image has the same size, the tracking target automatic setting unit automatically sets a face that is disposed at the center of the captured image among the plurality of faces of persons as the object, which is the tracking target.

3. The AF frame auto-tracking system according to claim 1 or 2,
wherein, when the determining unit determines that the face of the person is not included in the captured image, the tracking target automatic setting unit automatically sets an object in the range of the AF frame as the object, which is the tracking target.

4. The AF frame auto-tracking system according to any one of claims 1 to 3,
wherein the AF frame auto-tracking system is provided in a portable camera.

5. The AF frame auto-tracking system according to claim 4,
wherein an AF frame operating device that changes the position of the AF frame is not provided.
